# EUROPEAN PATENT SPECIFICATION

(11) **EP 1 545 098 B1**
(45) Date of publication and mention of the grant of the patent: **17.11.2010**
(21) Application number: 04030041.0
(22) Date of filing: 17.12.2004
(51) Int. Cl.: H04M 1/02, G06F 1/16, H01R 35/04

(54) **Signal connecting apparatus for foldable mobile terminal**
Vorrichtung zur Signalverbindung in einem klappbaren mobilen Endgerät.
Dispositif pour raccorder des signaux dans un terminal de communication radio portable de type pliable.

(30) Priority: 19.12.2003 KR 2003094038
(43) Date of publication of application: 22.06.2005
(73) Proprietor: LG Electronics, Inc., Seoul (KR)
(72) Inventor: Bang, Sung-Eun, Gwangmyung Gyunggi-Do (KR)
(74) Representative: Beyer, Andreas

(56) References cited:
- EP-A- 0 836 308
- US-A- 5 237 488
- US-B1- 6 272 324

## Description

### BACKGROUND OF THE INVENTION

### 1. Field of the Invention

The present invention relates to a foldable mobile terminal having a signal connecting apparatus, and more particularly, to a signal connecting apparatus for a foldable mobile terminal capable of enhancing an accuracy and a reliability for a signal exchange between a first body and a second body which is pivotably connected to the first body and having a high endurance against an external impact or torsion.

### 2. Description of the Conventional Art

Recently, a foldable mobile terminal having a folder portion rotatably mounted at a body centering around a hinge portion is being widely used.

In a foldable mobile terminal in accordance with the conventional art, a main board inside the body is connected to an inner circuit board of the folder portion by a flexible printed circuit board in order to transmit a signal between the body and the folder portion.

The conventional folder type mobile terminal will be explained in more detail as follows with reference to the attached drawings.

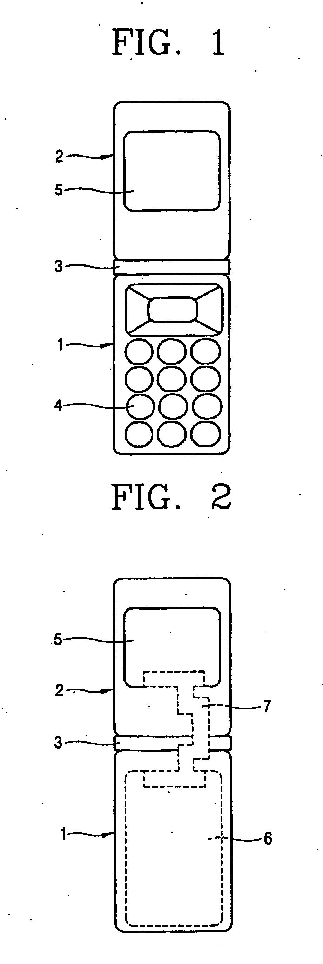

FIG. 1 is a frontal view showing an opened state of a folder type mobile terminal in accordance with the conventional art, and FIG. 2 is a schematic view showing an inner structure of the folder type mobile terminal in accordance with the conventional art.

As shown, the conventional folder type mobile terminal includes: a body 1; and a folder portion 2 rotatably coupled to the body 1 centering around a hinge portion 3.

The body 1 is provided with a keypad 4 for inputting information, and the folder portion 2 is provided with a display portion 5 for displaying characters or images.

The display portion 5 of the folder portion 2 is connected to a printed circuit board 6 installed inside the body 1 by a flexible printed circuit board 7 thereby to exchange signals therebetween.

The FPCB 7 is installed to pass through the hinge portion 3, and is well bent due to its flexible characteristic when the folder portion 2 is rotated centering around the hinge portion 3.

The FPCB 7 adopted by the conventional mobile terminal is formed as a copper wire more than 4 layers, and has approximately 20 data lines. In case of using the display portion 5 that can implement 65,000 colors, 8 to 16 data lines are further formed. Also, in case of using the display portion 5 that can implement colors more than 65, 000, data lines more than 2 are further formed for brightness of an image or for an additional driving.

However, when the FPCB is used as a signal transmission medium between the body and the folder portion in the conventional mobile terminal, the data line formed at the FPCB is too long and thereby a time difference is generated due to an inner capacitance of the data line when each data is transmitted. According to this, an operation not to generate the time difference has to be performed in advance. However, it is not easy to obtain a reliability at the time of the operation, and much cost and time are required at the time of obtaining the reliability.

In case that the folder portion or the body is rotated centering around the hinge portion through which the FPCB passes or torsion is generated, the FPCB may be easily damaged. According to this, the data line is cut and thereby the display portion becomes white or an image is not outputted.

In case that the data line is cut, a partial repair is impossible and the FPCB has to be entirely replaced thereby to cause high cost and degraded efficiency.

US 5,237,488 discloses an electrically conductive hinge for the transmission of electrical power and signals between a pivotally connected display unit and system unit of a portable computer to eliminate cable connections between these units. This document discloses to use a set of wipers for radially contacting conductive lines on a connector element inside a hinge to conductively connect different parts of the portable computer.

EP 0 863 308 A1 discloses a portable telephone with rotary contacts incorporated in hinges connecting a body to a cover of the portable telephone. This document further suggests to press contacts together by use of a first spring and to utilize conductive sleeves, all of them disposed in one or more hinges.

US 6,272,324 D1 discloses an electrical connector to establish electrical connection between electronics disposed in a main body of a mobile phone and remote electrical components contained in a movable cover. It discloses to dispose fixed contacts connected to transceiver electronics on the main body of the phone and to dispose movable contacts on the cover. It further discloses to construct contacts to be commutating to keep an electrical connection while opening or closing the foldable phone.

### SUMMARY OF THE INVENTION

Therefore, an object of the present invention is to provide a signal connecting apparatus for a foldable mobile terminal capable of enhancing an accuracy and a reliability for a signal exchange between a body and a folder portion and having a high endurance against an external impact or torsion.

To achieve these and other advantages and in accordance with the purpose of the present invention, as embodied and broadly described herein, there is provided a foldable mobile terminal having a signal connecting apparatus according to the features of patent claim 1.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
- FIG. 1: is a front view showing a state that a second body of a folder type mobile terminal is opened in accordance with the conventional art;
- FIG. 2: is a schematic view showing the inside of the folder type mobile terminal in accordance with the conventional art;
- FIG. 3: is a schematic view showing the inside of a foldable mobile terminal according to the present invention;
- FIG. 4: is a front view showing one embodiment of a signal connecting apparatus of the foldable mobile terminal according to the present invention;
- FIG. 5: is a section view showing a lateral surface of the signal connecting apparatus of the foldable mobile terminal according to one embodiment of the present invention; and
- FIG. 6: is a section view showing a lateral surface of the signal connecting apparatus of the foldable mobile terminal according to another embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

Hereinafter, one embodiment of a foldable mobile terminal having a signal connecting apparatus according to the present invention will be explained in more detail with reference to the attached drawings.

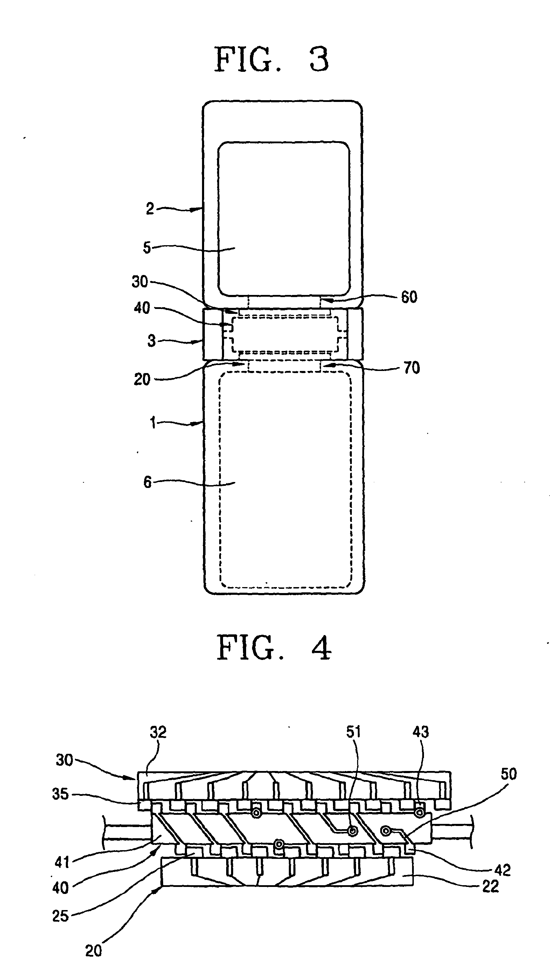

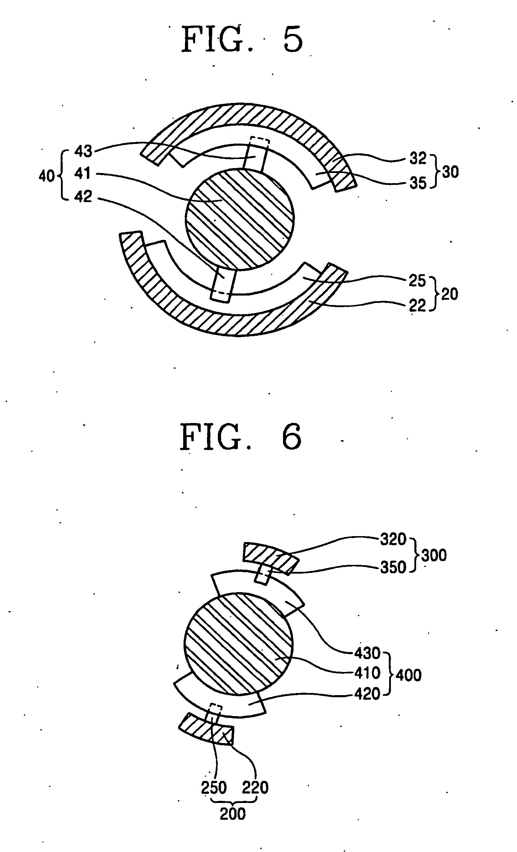

FIG. 3 is a schematic view showing the inside of a foldable mobile terminal according to the present invention, FIG. 4 is a front view showing one embodiment of a signal connecting apparatus of the foldable mobile terminal according to the present invention, and FIG. 5 is a section view showing a lateral surface of the signal connecting apparatus of the foldable mobile terminal according to one embodiment of the present invention.

As shown, a foldable mobile terminal having a signal connecting apparatus according to one embodiment of the present invention comprises: a first body 1 having a main board 6 therein; a second body 2 having a display portion 5 and rotatably connected to the first body 1 by a connection part 3; and a plurality of connectors installed in the connection part 3 and performing a relative rotation reciprocally in a state of being electrically connected to one another for a signal exchange between the main board 6 and the display portion 5 as the second body 2 is opened and closed from/to the first body 1.

A construction of the signal connecting apparatus of a foldable mobile terminal according to the present invention for electrically connecting the main board 6 of the first body 1 and the display portion 5 of the second body 2 each other will be explained in more detail as follows.

The signal connecting apparatus comprises: a first connector 20 electrically connected to the main board 6 and installed at one side of an inner circumferential surface of the connection part 3; a second connector 30 electrically connected to the display portion 5 and installed at one side of the inner circumferential surface of the connection part 3; and a third connector 40 installed between the first connector 20 and the second connector 30 to pass through a center axis of the connection part 3, for electrically connecting the first connector 20 and the second connector 30 each other.

When the second body 2 is opened and closed from/to the first body 1 on the basis of the connection part 3, the plurality of connectors 20, 30, and 40 of the signal connecting apparatus perform a relative rotation reciprocally in a state of being electrically connected to one another as the first body 1 and the second body 2 are moved. According to this, a signal transmission is performed between the first body 1 and the second body 2.

The first connector 20 is composed of: a base plate 22 installed at the inner circumferential surface of the connection part 3 thus to be electrically connected to the main board 6 of the first body 1; and a plurality of connection terminals 25 electrically connected to the third connector 40 at one side of the base plate 22.

The plurality of connection terminals 25 of the first connector 20 are protruded towards a direction of the center axis of the connection part 3, and are formed with a certain interval in a longitudinal direction of the connection part 3.

The second connector 30 is composed of: a base plate 32 installed at the inner circumferential surface of the connection part 3 thus to be electrically connected to the display portion 5 of the second body 2; and a plurality of connection terminals 35 electrically connected to the third connector 40 at one side of the base plate 32. The plurality of connection terminals 35 of the second connector 30 are protruded towards a direction of the center axis of the connection part 3, and are formed with a certain interval in a longitudinal direction of the connection part 3.

In order to electrically connect the connection terminals 25 of the first connector 20 to the connection terminals 35 of the second connector 30, the third connector 40 installed at the center axis of the connection part 3 has a plurality of connection terminals at an outer circumferential surface thereof.

That is, the third connector 40 is composed of: a cylindrical body 41 installed at the center of the connection part 3 in a direction of the center axis of the connection part 3; and a plurality of connection terminals protruded at an outer circumferential surface of the body 41.

The body 41 of the third connector 40 has to be firmly installed concentrically with the connection part 3. Therefore, the body 41 is preferably formed of metal that is not easily bent or a material similar to the metal.

The plurality of connection terminals of the third connector 40 are composed of a plurality of first connection terminals 42 electrically connected to the connection terminals 25 of the first connector 20, and a plurality of second terminals 43 electrically connected to the connection terminals 35 of the second connector 30.

The first connection terminals 42 are protruded from an outer circumferential surface of the body 41 of the third connector 40 towards an inner circumferential surface of the connection part 3, and are formed with a certain interval in a longitudinal direction of the body 41.

One surface of each first connection terminal 42 is in contact with one surface of each connection terminal 25 of the first connector 20 with the same manner. That is, the first connection terminal 42 is positioned to be matched between the connection terminals 25 of the first connector 20. At this time, one lateral surface of the first connection terminal 42 is adhered to one lateral surface of one connection terminal of the first connector 20 between the connection terminals positioned at both sides of the first connection terminal 42.

The second connection terminals 43 are protruded from an outer circumferential surface of the body 41 of the third connector 40 towards an inner circumferential surface of the connection part 3, and are formed with a certain interval in a longitudinal direction of the body 41.

One surface of each second connection terminal 43 is in contact with one surface of each connection terminal 35 of the second connector 30 with the same manner. That is, the second connection terminal 43 is positioned to be matched between the connection terminals 35 of the second connector 30. At this time, one lateral surface of the second connection terminal 43 is adhered to one lateral surface of one connection terminal of the second connector 30 between the connection terminals positioned at both sides of the second connection terminal 43.

The first connection terminals 42 and the second connection terminals 43 are alternately formed in a longitudinal direction of the third connector 40.

When the first connector 20, the second connector 30, and the third connector 40 are engaged to one another, a terminal position of each connector is as follows. That is, it is preferable that the connection terminals 25 of the first connector 20 are alternates with the first connection terminals 42 of the third connector 40, and the second connection terminals 43 of the third connector 40 alternate with the connection terminals 35 of the second connector 30.

A conductive circuit pattern 50 is formed at a surface of the body 41 of the third connector 40 in order to electrically connect a signal between the first connection terminal 42 and the second connection terminal 43.

An insulating layer is formed at an outer circumferential surface of the body 41 in order to precisely exchange a signal without an error between the first connection terminal 42 and the second connection terminal 43 and in order to prevent cross-wires. Also, it is preferable that the conductive circuit pattern 50 is formed on the insulating layer with consideration of data lines and power lines.

It is preferable to form the conductive circuit pattern 50 after forming the first connection terminal 42 and the second connection terminal 43. It is also possible to simultaneously form the first connection terminal 42, the second connection terminal 43, and the conductive circuit pattern 50 according to a fabrication method.

A plurality of vias 51 are preferably formed at the conductive pattern 50 in order to obtain added data lines in case that predetermined data lines are not arranged.

FIG. 5 is a section view showing a lateral surface of the signal connecting apparatus of the folder type mobile terminal according to one embodiment of the present invention.

As shown, the base plates 22 and 32 of the first and second connectors 20 and 30 and the connection terminals 25 and 35 are extendingly formed in a circumferential direction of the connection part 3 with a certain length, and are rotated along an outer circumferential surface of the third connector 40. Therefore, the base plates 22 and 32 of the first and second connectors 20 and 30 and the connection terminals 25 and 35 are preferably formed as a circular arc shape.

Each end of the first connection terminal 42 and the second connection terminal 43 of the third connector 40 is protruded from an outer circumferential surface of the body 41 thus to form a certain gap from the base plates 22 and 32 of the first and second connectors 20 and 30. According to this, the first and second connection terminals 42 and 43 of the third connector 40 can perform a relative rotation one another in a state of contacting the connection terminals of the first and second connectors 20 and 30.

An installation position of the base plates 22 and 32 of the first and second connectors 20 and 30 and a length of the connection terminals 25 and 35 in a circumferential direction of the connection part 3 can be variously modified according to a relative motion and an electric connection state among the first connector 20, the second connector 30, and the third connector 40 by a design of the connection part 3.

That is, when the second body 2 is closed, an electric signal is continuously connected at parts that an electric signal has to be connected between the main board 6 of the first body 1 and the display portion 5 of the second body 2, and an electric signal is not connected to parts that an electric signal has to be cut.

On the contrary, when the second body 2 is opened, a maximum opened angle between the second body 2 and the first body 1 and a rotation range up to the opened angle have to be considered.

The main board 6 of the first connector 20 is electrically connected to the display portion 5 of the second connector 30 by connection members 60 and 70. As the connection members 60 and 70, a receptacle, a soft PCB, a hard PCB, etc. can be used according to an installation of the connection part 3.

An operation of the signal connecting apparatus for a folder type mobile terminal according to one embodiment of the present invention is shown in FIG. 5. That is, the first connector 20 and the second connector 30 are fixed to an inner circumferential surface of the connection part 3 at a certain position, and the third connector 40 is rotated. That is, FIG. 5 shows that the first connector 20, the second connector 30, and the third connector 40 perform a relative rotation to one another. By the relative rotation among the first connector 20, the second connector 30, and the third connector 40, a signal transmission is performed between the first body 1 and the second body 2 as the second body 2 is opened and closed.

However, as aforementioned, an installation position of the first connector 20 and the second connector 30 at an inner circumferential surface of the connection part, an installation method, and a rotation of the third connector 40 can be variously modified according to a design of the folder type mobile terminal and a design of the connection part.

FIG. 6 is a section view showing a lateral surface of the signal connecting apparatus of the foldable mobile terminal according to another embodiment of the present invention.

As shown, a signal connecting apparatus according to another embodiment of the present invention comprises: a first connector 200 electrically connected to the main board 6 of the first body 1 and installed at one side of an inner circumferential surface of the connection part 3; a second connector 300 electrically connected to the display portion 5 of the second body 2 and installed at one side of the inner circumferential surface of the connection part 3; and a third connector 400 installed between the first connector 200 and the second connector 300 along a center axis of the connection part 3, for electrically connecting the first connector 200 and the second connector 300 each other.

The connectors 200, 300, and 400 of the signal connecting apparatus perform a relative rotation reciprocally in a state of being electrically connected to one another as the first body 1 and the second body 2 are moved. According to this, a signal transmission is performed between the first body 1 and the second body 2.

The first connector 200 is composed of a body 220 of a circular arc shape to be installed at the inner circumferential surface of the connection part 3, and a plurality of connection terminals 250 protruded towards the center axis of the connection part 3 at one side of the body 220.

The second connector 300 is composed of a body 320 of a circular arc shape to be installed at the inner circumferential surface of the connection part 3, and a plurality of connection terminals 350 protruded towards the center axis of the connection part 3 at one side of the body 320.

The third connector 400 is composed of a body 410 of a circular arc shape installed along the center axis of the connection part 3, a plurality of first connection terminals 420 formed at an outer circumferential surface of the body 410 and electrically connected to the connection terminals of the first connector 200, and a plurality of second connection terminals 430 electrically connected to the connection terminals of the second connector 300.

The first connection terminals 420 are extended along a circumferential direction of the body 410 of the third connector 400 with a certain length, and the second connection terminals 430 are extended along a circumferential direction of the body 410 of the third connector 400 with a certain length.

A length of the first connection terminal 420 and the second connection terminal 430 can be variously modified according to a relative motion and an electrical connection state among each connector 200, 300, and 400 according to a design of the connection part 3.

That is, the length of the first connection terminal 420 and the second connection terminal 430 can be variously modified according to a degree of an opened angle between the second body and the first body and a signal connection state between the second body and the first body.

As shown in FIG. 6, in the signal connecting apparatus according to another embodiment of the present invention, like in the signal connecting apparatus according to one embodiment of the present invention, a position and an installation state of the connectors 200, 300, and 400 can be variously modified according to a design of the foldable mobile terminal, especially, a design of the connection part. According to another embodiment of the present invention, as shown in FIG. 6, a length of the first connector 200 and the second connector 300 in a circumferential direction of the connection part 3 is short. Therefore, a design of the connection part 3 with consideration of a rotation relation among the connectors 200, 300, and 400, and a connection structure between the second body 2 and the first body 1 by the connection part 3 can be more variously modified.

As aforementioned, in the foldable type mobile terminal having a signal connecting apparatus according to the present invention, a plurality of connectors constructed in the connection part serve as a medium for a signal transmission between the first body and the second body. According to this, the signal connecting apparatus has a high endurance against a fatigue destruction due to a repetitive opening/closing of the second body, and has a high reliability when a torsion of the connection part is generated.

Also, since the length of the data line becomes short, a capacitance between the data lines is decreased thereby to reduce a delay time of the data line when the signal connecting apparatus is operated.

Additionally, since components can be easily mass-produced and the components can be easily designed, the fabrication cost can be reduced. Also, in case that the signal connecting apparatus breaks down due to a user's carelessness, the signal connecting apparatus can be easily repaired.

The signal connecting apparatus of the present invention can be applied to various products such as a folder type terminal, a machine for amusement, an PDA, etc.

As the present invention may be embodied in several forms without departing from the essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the scope of the claims are therefore intended to be embraced by the appended claims.

## Claims

1. A foldable mobile terminal having a signal connecting apparatus, the mobile terminal comprising:
- a first body (1) having a main board (6),
- a second body (2) having a display portion (5),
- a connection part (3) rotatably connecting the first body (1) and the second body (2),
wherein the signal connecting apparatus comprises a first connector (20) electrically connected to the main board (6), a second connector (30) electrically connected to the display portion (5) and a third connector (40) arranged along a center axis of the connection part (3) for electrically connecting the first connector (20) and the second connector (30) to each other, the first connector (20), second connector (30) and third connector (40) each comprising a plurality of terminals (25, 35, 42, 43) arranged in an axial direction of the connection part (3) and adapted to perform a relative rotation reciprocally,
**characterised in that** one of the lateral surfaces of each of the terminals (25) of the first connector (20) is in contact with one of the lateral surfaces of one of the terminals (42) of the third connector (40) and that one of the lateral surfaces of each of the terminals (35) of the second connector (30) is in contact with one of the lateral surfaces of one of the terminals (43) of the third connector (40), wherein said lateral surfaces are perpendicular to the said center axis.

2. The mobile terminal of claim 1, wherein:
- the first connector (20) is installed at one side of an inner circumferential surface of the connection part (3); and
- the second connector (30) is installed at one side of the inner circumferential surface of the connection part (3).

3. The mobile terminal of claim 2, wherein the first connector (20) comprises:
- a base plate (22) installed at the inner circumferential surface of the connection part (3) thus to be electrically connected to the main board (6) of the first body (1); and
- the plurality of connection terminals (25) are formed at one side of the base plate (22) and electrically connected to the third connector (40).

4. The device of claim 3, wherein the plurality of connection terminals (25) of the first connector (20) are protruded towards a direction of the center axis of the connection part (3), and are formed with a certain interval in a longitudinal direction of the connection part (3).

5. The device of claim 4, wherein the second connector (30) comprises:
- a base plate (32) installed at the inner circumferential surface of the connection part (3) thus to be electrically connected to the display portion (5); and
- the plurality of connection terminals (35) are formed at one side of the base plate (32) and electrically connected to the third connector (40).

6. The device of claim 5, wherein the plurality of connection terminals (35) of the second connector are protruded towards a direction of the center axis of the connection part (3), and are formed with a certain interval in a longitudinal direction of the connection part (3).

7. The device of claim 6, wherein the third connector (40) comprises:
- a cylindrical body (41) installed at a center of the connection part (3) in a direction of the center axis of the connection part (3); and
- the plurality of connection terminals (42, 43) protrude at an outer circumferential surface of the body (41) in order to be electrically connected to the connection terminals (25) of the first connector (20) and the connection terminals (35) of the second connector (30).

8. The device of claim 7, wherein the plurality of connection terminals (42, 43) of the third connector (40) comprise:
- a plurality of first connection terminals (42) electrically connected to the connection terminals (25) of the first connector (20); and
- a plurality of second terminals (43) electrically connected to the connection terminals(35) of the second connector (30).

9. The device of claim 8, wherein the plurality of first connection terminals (42) are protruded from an outer circumferential surface of the body (41) of the third connector (40) towards an inner circumferential surface of the connection part (3), and are formed with a certain interval in a longitudinal direction of the body (41).

10. The device of claim 9, wherein the first connection terminals (42) are positioned to be matched between the connection terminals (25) of the first
connector and one lateral surface of each of the first connection terminals (42) is adhered to one lateral surface of one of the connection terminals (25) of the first connector (20).

11. The device of claim 10, wherein the plurality of second connection terminals (43) are protruded from an outer circumferential surface of the body (41) of the third connector (40) towards an inner circumferential surface of the connection part (3), and are formed with a certain interval in a longitudinal direction of the body (41).

12. The device of claim 11, wherein the second connection terminals (43) are positioned to be matched between the connection terminals (35) of the second connector (30) and one lateral surface of each of the second connection terminals (43) is adhered to one lateral surface of one of the connection terminals (35) of the second connector (30).

13. The device of claim 12, wherein the first connection terminals (42) alternate with the second connection terminals (43) in a longitudinal direction of the third connector (40).

14. The device of claim 13, wherein an insulating layer is formed at an outer circumferential surface of the body (41) in order to precisely exchange a signal without an error between the first connection terminals (25) and the second connection terminals (35), and a conductive circuit pattern (50) is formed on the insulating layer.

15. The device of claim 14, wherein a plurality of vias are formed on the conductive circuit pattern (50).

16. The device of claim 15, wherein the base plate (22) and the connection terminals (25) of the first connector (20), and the base plate (32) and the connection terminals (35) of the second connector (30) are extendingly formed with a certain length as a circular arc shape in a circumferential direction of the connection part (3).

17. The device of claim 16, wherein each end of the first connection terminals (42) and the second connection terminals (43) of the third connector (40) is spaced from the base plate (22) of the first connector (20) and the base plate (32) of the second connector (30).

18. The device of claim 15, wherein the first connection terminals (42) and the second connection terminals (43) are extendingly formed with a certain length in a circumferential direction of the body (41) of the third connector (40).

## Patentansprüche

1. Klappbares mobiles Endgerät mit einer Signalverbindungseinrichtung, wobei das mobile Endgerät aufweist:
- einen ersten Gehäusekörper (1) mit einer Hauptplatine (6),
- einen zweiten Gehäusekörper (2) mit einem Anzeigebereich (5),
- ein Verbindungsbauteil (3), welches den ersten Gehäusekörper (1) und den zweiten Gehäusekörper (2) drehbar verbindet,
wobei die Signalverbindungseinrichtung einen ersten Verbinder (20), der elektrisch mit der Hauptplatine (6) verbunden ist, einen zweiten Verbinder (30), der elektrisch mit dem Anzeigebereich (5) verbunden ist, und einen dritten Verbinder (40) aufweist, der längs einer Mittelachse des Verbindungsbauteils (3) zum elektrischen Verbinden des ersten Verbinders (20) und des zweiten Verbinders (30) miteinander angeordnet ist, wobei der erste Verbinder (20), der zweite Verbinder (30) und der dritte Verbinder (40) jeweils mehrere Anschlüsse (25, 35, 42, 43) umfassen, die in einer Axialrichtung des Verbindungsbauteils (3) angeordnet sind und eine wechselseitige Relativdrehung auszuführen vermögen,
**dadurch gekennzeichnet, dass** eine der Seitenflächen von jedem der Anschlüsse (25) des ersten Verbinders (20) in Kontakt mit einer der Seitenflächen von einem der Anschlüsse (42) des dritten Verbinders (40) ist und dass eine der Seitenflächen von jedem der Anschlüsse (35) des zweiten Verbinders (30) in Kontakt mit einer der Seitenflächen von einem der Anschlüsse (43) des dritten Verbinders (40) ist, wobei die Seitenflächen rechtwinklig zu der Mittelachse sind.

2. Mobiles Endgerät nach Anspruch 1, bei dem:
- der erste Verbinder (20) auf einer Seite einer Innenumfangsfläche des Verbindungsbauteils (3) eingebaut ist, und
- der zweite Verbinder (30) auf einer Seite der Innenumfangsfläche des Verbindungsbauteils (3) eingebaut ist.

3. Mobiles Endgerät nach Anspruch 2, bei dem der erste Verbinder (20) aufweist:
- eine Grundplatte (22), die an der Innenumfangsfläche des Verbindungsbauteils (3) derart angebracht ist, dass sie elektrisch mit der Hauptplatine (6) des ersten Gehäusekörpers (1) verbunden ist, und wobei
- die mehreren Verbindungsanschlüsse (25) auf einer Seite der Grundplatte (22) ausgebildet und elektrisch mit dem dritten Verbinder (40) verbunden sind.

4. Mobiles Endgerät nach Anspruch 3, bei dem die mehreren Verbindungsanschlüsse (25) des ersten Verbinders in Richtung der Mittelachse des Verbindungsbauteils (3) vorstehen und mit einem gewissen Abstand in einer Längsrichtung des Verbindungsbauteils (3) ausgebildet sind.

5. Mobiles Endgerät nach Anspruch 4, bei dem der zweite Verbinder (30) aufweist:
- eine Grundplatte (32), die an der Innenumfangsfläche des Verbindungsbauteils (3) derart angebracht ist, dass sie elektrisch mit dem Anzeigebereich (5) verbunden ist, und wobei
- die mehreren Verbindungsanschlüsse (35) auf einer Seite der Grundplatte (32) ausgebildet und elektrisch mit dem dritten Verbinder (40) verbunden sind.

6. Mobiles Endgerät nach Anspruch 5, bei dem die mehreren Verbindungsanschlüsse (35) des zweiten Verbinders in Richtung der Mittelachse des Verbindungsbauteils (3) vorstehen und mit einem gewissen Abstand in einer Längsrichtung des Verbindungsbauteils (3) ausgebildet sind.

7. Mobiles Endgerät nach Anspruch 6, bei dem der dritte Verbinder (40) aufweist:
- einen zylindrischen Körper (41), der in einem Zentrum des Verbindungsbauteils (3) in Richtung der Mittelachse des Verbindungsbauteils (3) angebracht ist, und wobei
- die mehreren Verbindungsanschlüsse (42, 43) an einer Außenumfangsfläche des Körpers (41) hervorstehen, um elektrisch mit den Verbindungsanschlüssen (25) des ersten Verbinders (20) und den Verbindungsanschlüssen (35) des zweiten Verbinders (30) verbunden zu sein.

8. Mobiles Endgerät nach Anspruch 7, bei dem die mehreren Verbindungsanschlüsse (42, 43) des dritten Verbinders (40) aufweisen:
- mehrere erste Verbindungsanschlüsse (42), die elektrisch mit den Verbindungsanschlüssen (25) des ersten Verbinders (20) verbunden sind, und
- mehrere zweite Anschlüsse (43), die elektrisch mit den Verbindungsanschlüssen (35) des zweiten Verbinders (30) verbunden sind.

9. Mobiles Endgerät nach Anspruch 8, bei dem die mehreren ersten Verbindungsanschlüsse (42) von einer Außenumfangsfläche des Körpers (41) des dritten Verbinders (40) zu einer Innenumfangsfläche des Verbindungsbauteils (3) vorstehen und mit einem gewissen Abstand in einer Längsrichtung des Körpers (41) ausgebildet sind.

10. Mobiles Endgerät nach Anspruch 9, bei dem die ersten Verbindungsanschlüsse (42) dazu positioniert sind, zwischen die Verbindungsanschlüsse (25) des ersten Verbinders zu passen, wobei eine Seitenfläche von jedem der ersten Verbindungsanschlüsse (42) an einer Seitenfläche eines der Verbindungsanschlüsse (25) des ersten Verbinders (20) anhaftet.

11. Mobiles Endgerät nach Anspruch 10, bei dem die mehreren zweiten Verbindungsanschlüsse (43) von einer Außenumfangsfläche des Körpers (41) des dritten Verbinders (40) zu einer Innenumfangsfläche des Verbindungsbauteils (3) vorstehen und mit einem gewissen Abstand in einer Längsrichtung des Körpers (41) ausgebildet sind.

12. Mobiles Endgerät nach Anspruch 11, bei dem die zweiten Verbindungsanschlüsse (42) so positioniert sind, dass sie zwischen die Verbindungsanschlüsse (35) des zweiten Verbinders (30) passen, wobei eine Seitenfläche von jedem der zweiten Verbindungsanschlüsse (43) an einer Seitenfläche eines der Verbindungsanschlüsse (35) des zweiten Verbinders (30) anhaftet.

13. Mobiles Endgerät nach Anspruch 12, bei dem die ersten Verbindungsanschlüsse (42) sich mit den zweiten Verbindungsanschlüssen (43) in einer Längsrichtung des dritten Verbinders (40) abwechseln.

14. Mobiles Endgerät nach Anspruch 13, bei dem auf einer Außenumfangsfläche des Körpers (41) eine Isolierschicht ausgebildet ist, um zwischen den ersten Verbindungsanschlüssen (25) und den zweiten Verbindungsanschlüssen (35) ein Signal genau und ohne Fehler auszutauschen, wobei auf der Isolierschicht ein leitfähiges Schaltungsmuster (50) ausgebildet ist.

15. Mobiles Endgerät nach Anspruch 14, bei dem auf dem leitfähigen Schaltungsmuster (50) mehrere Durchkontaktierungen ausgebildet sind.

16. Mobiles Endgerät nach Anspruch 15, bei dem die Grundplatte (22) und die Verbindungsanschlüsse (25) des ersten Verbinders (20) sowie die Grundplatte (32) und die Verbindungsanschlüsse (35) des zweiten Verbinders (30) sich erstreckend ausgebildet sind, wobei eine gewisse Länge eine Kreisbogenform in einer Umfangsrichtung des Verbindungsbauteils (3) hat.

17. Mobiles Endgerät nach Anspruch 16, bei dem jedes Ende der ersten Verbindungsanschlüsse (42) und der zweiten Verbindungsanschlüsse (43) des dritten Verbinders (40) von Grundplatte (22) des ersten Verbinders (20) und der Grundplatte (32) des zweiten Verbinders (30) beabstandet ist.

18. Mobiles Endgerät nach Anspruch 15, bei dem die ersten Verbindungsanschlüsse (42) und die zweiten Verbindungsanschlüsse (43) sich mit einer gewissen Länge in einer Umfangsrichtung des Körpers (41) des dritten Verbinders (40) erstreckend ausgebildet sind.

## Revendications

1. Terminal mobile à clapet ayant un appareil de connexion de signaux, le terminal mobile comprenant :
- un premier corps (1) ayant une carte mère (6),
- un deuxième corps (2) ayant une partie d'affichage (5), - une partie de connexion (3) connectant de façon rotative le premier corps (1) et le deuxième corps (2),
dans lequel l'appareil de connexion de signaux comprend un premier connecteur (20) électriquement connecté à la carte mère (6), un deuxième connecteur (30) électriquement connecté à la partie d'affichage (5) et un troisième connecteur (40) agencé le long d'un axe central de la partie de connexion (3) pour connecter électriquement le premier connecteur (20) et le deuxième connecteur (30) l'un à l'autre, le premier connecteur (20), le deuxième connecteur (30) et le troisième connecteur (40) comprenant chacun une pluralité de bornes (25, 35, 42, 43) agencées dans un sens axial de la partie de connexion (3) et adaptés à effectuer une rotation relative réciproquement,
**caractérisé en ce que** l'une des surfaces latérales de chacune des bornes (25) du premier connecteur (20) est en contact avec l'une des surfaces latérales de l'une des bornes (42) du troisième connecteur (40) et que l'une des surfaces latérales de chacune des bornes (35) du deuxième connecteur (30) est en contact avec l'une des surfaces latérales de l'une des bornes (43) du troisième connecteur (40), dans lequel lesdites surfaces latérales sont perpendiculaires audit axe central.

2. Terminal mobile selon la revendication 1, dans lequel :
- le premier connecteur (20) est installé sur un côté d'une surface circonférentielle intérieure de la partie de connexion (3) ; et
- le deuxième connecteur (30) est installé sur un côté de la surface circonférentielle intérieure de la partie de connexion (3).

3. Terminal mobile selon la revendication 2, dans lequel le premier connecteur (20) comprend:
- une plaque de base (22) installée sur la surface circonférentielle intérieure de la partie de connexion (3) pour être ainsi électriquement connectée à la carte mère (6) du premier corps (1) ; et
- la pluralité de bornes de connexion (25) sont formées sur un côté de la plaque de base (22) et électriquement connectées au troisième connecteur (40).

4. Dispositif selon la revendication 3, dans lequel la pluralité de bornes de connexion (25) du premier connecteur (20) font saillie dans une direction de l'axe central de la partie de connexion (3), et sont formées avec un certain intervalle dans un sens longitudinal de la partie de connexion (3).

5. Dispositif selon la revendication 4, dans lequel le deuxième connecteur (30) comprend :
- une plaque de base (32) installée sur la surface circonférentielle intérieure de la partie de connexion (3) pour être ainsi électriquement connectée à la partie d'affichage (5) ; et
- la pluralité de bornes de connexion (35) sont formées sur un côté de la plaque de base (32) et électriquement connectées au troisième connecteur (40).

6. Dispositif selon la revendication 5, dans lequel la pluralité de bornes de connexion (35) du deuxième connecteur font saillie dans une direction de l'axe central de la partie de connexion (3), et sont formées avec un certain intervalle dans un sens longitudinal de la partie de connexion (3).

7. Dispositif selon la revendication 6, dans lequel le troisième connecteur (40) comprend :
- un corps (41) cylindrique installé sur un centre de la partie de connexion (3) dans une direction de l'axe central de la partie de connexion (3) ; et
- la pluralité de bornes de connexion (42, 43) font saillie sur une surface circonférentielle extérieure du corps (41) afin d'être électriquement connectées aux bornes de connexion (25) du premier connecteur (20) et aux bornes de connexion (35) du deuxième connecteur (30).

8. Dispositif selon la revendication 7, dans lequel la pluralité de bornes de connexion (42, 43) du troisième connecteur (40) comprennent :
- une pluralité de premières bornes de connexion (42) électriquement connectées aux bornes de connexion (25) du premier connecteur (20) ; et
- une pluralité de deuxièmes bornes (43) électriquement connectées aux bornes de connexion (35) du deuxième connecteur (30).

9. Dispositif selon la revendication 8, dans lequel la pluralité de premières bornes de connexion (42) font saillie d'une surface circonférentielle extérieure du corps (41) du troisième connecteur (40) vers une surface circonférentielle intérieure de la partie de connexion (3), et sont formées avec un certain intervalle dans un sens longitudinal du corps (41).

10. Dispositif selon la revendication 9, dans lequel les premières bornes de connexion (42) sont positionnées de façon à être mises en correspondance entre les bornes de connexion (25) du premier connecteur et une surface latérale de chacune des premières bornes de connexion (42) adhère à une surface latérale de l'une des bornes de connexion (25) du premier connecteur (20).

11. Dispositif selon la revendication 10, dans lequel la pluralité de deuxièmes bornes de connexion (43) font saillie d'une surface circonférentielle extérieure du corps (41) du troisième connecteur (40) vers une surface circonférentielle intérieure de la partie de connexion (3), et sont formées avec un certain intervalle dans un sens longitudinal du corps (41).

12. Dispositif selon la revendication 11, dans lequel les deuxièmes bornes de connexion (43) sont positionnées de façon à être mises en correspondance entre les bornes de connexion (35) du deuxième connecteur (30) et une surface latérale de chacune des deuxièmes bornes de connexion (43) adhère à une surface latérale de l'une des bornes de connexion (35) du deuxième connecteur (30).

13. Dispositif selon la revendication 12, dans lequel les premières bornes de connexion (42) alternent avec les deuxièmes bornes de connexion (43) dans un sens longitudinal du troisième connecteur (40).

14. Dispositif selon la revendication 13, dans lequel une couche d'isolation est formée sur une surface circonférentielle extérieure du corps (41) afin d'échanger précisément un signal sans erreur entre les premières bornes de connexion (25) et les deuxièmes bornes de connexion (35), et un motif de circuit conducteur (50) est formé sur la couche d'isolation.

15. Dispositif selon la revendication 14, dans lequel une pluralité de chemins sont formés sur le motif de circuit conducteur (50).

16. Dispositif selon la revendication 15, dans lequel la plaque de base (22) et les bornes de connexion (25) du premier connecteur (20), et la plaque de base (32) et les bornes de connexion (35) du deuxième connecteur (30) sont formées de façon étendue avec une certaine longueur comme une forme d'arc circulaire dans un sens circonférentiel de la partie de connexion (3).

17. Dispositif selon la revendication 16, dans lequel chaque extrémité des premières bornes de connexion (42) et des deuxièmes bornes de connexion (43) du troisième connecteur (40) est espacée de la plaque de base (22) du premier connecteur (20) et de la plaque de base (32) du deuxième connecteur (30).

18. Dispositif selon la revendication 15, dans lequel les premières bornes de connexion (42) et les deuxièmes bornes de connexion (43) sont formées de façon étendue avec une certaine longueur dans un sens circonférentiel du corps (41) du troisième connecteur (40).
